# FASCICULE DE BREVET EUROPEEN

(11) **EP 3 084 772 B1**
(45) Date de publication et mention de la délivrance du brevet: **29.08.2018**
(21) Numéro de dépôt: 14824901.4
(22) Date de dépôt: 16.12.2014
(51) Int. Cl.: G21C 19/32, G21F 5/14, G21F 7/005

(54) **DISPOSITIF D'ACCOSTAGE D'UN CONTENEUR DE COMBUSTIBLE IRRADIÉ SOUS UNE FOSSE D'INSTALLATION NUCLÉAIRE ET CONTENANT DU COMBUSTIBLE IRRADIÉ**
VORRICHTUNG ZUR ZUSAMMENFÜGUNG MIT EINEM BEHÄLTER MIT BESTRAHLTEM BRENNSTOFF UNTER EINER KERNKRAFTANLAGENGRUBE UND MIT BESTRAHLTEM BRENNSTOFF
DEVICE FOR MATING WITH AN IRRADIATED FUEL CONTAINER UNDER A NUCLEAR FACILITY PIT AND CONTAINING IRRADIATED FUEL

(30) Priorité: 20.12.2013 FR 1303045
(43) Date de publication de la demande: 26.10.2016
(73) Titulaire: Constructions Industrielles de la Méditerranée - CNIM, 75008 Paris (FR)
(72) Inventeur: MAILHOT, Dominique, F-83500 La Seyne sur Mer (FR); CITEAU, Sébastien, F-83500 La Seyne sur Mer (FR)
(74) Mandataire: Thinat, Michel
(86) Numéro de dépôt international: PCT/FR2014/053356
(87) Numéro de publication internationale: WO 2015/092256

(56) Documents cités:
- FR-A1- 2 496 323
- US-A- 3 883 012

## Description

La présente invention concerne d'une manière générale un dispositif de chargement de conteneurs en combustible irradié d'un réacteur nucléaire ou d'une usine de retraitement de combustible et elle vise plus particulièrement un dispositif d'accostage d'un conteneur sous une fosse contenant du combustible irradié et faisant partie d'une telle installation nucléaire.

La demande de brevet français FR 2 496 323 au nom de la demanderesse divulgue un dispositif d'accostage d'un conteneur sous une fosse de chargement dans une installation nucléaire, un autre dispositif d'accostage est divulgué par US3883012. Comme indiqué dans FR 2 496 323, ce dispositif comprend un chariot de manutention sur lequel est positionné le conteneur qui est amené sous une pénétration assurant la liaison entre la fosse contenant du combustible irradié et le hall où est situé ce chariot.

Des moyens sont prévus pour assurer la continuité de l'étanchéité entre la fosse déchargeant le combustible irradié et le conteneur recevant le combustible irradié de la fosse, lequel conteneur est ensuite évacué après lui avoir remis son bouchon de fermeture.

Ces moyens permettant d'assurer la continuité de l'étanchéité comprennent un soufflet métallique et un mécanisme à vérins, logé dans la structure de la pénétration et permettant d'abaisser l'extrémité inférieure du soufflet afin d'appliquer une bride munie de joints sur une bride supérieure du conteneur.

Cependant, ce dispositif connu présente comme inconvénients la nécessité de soulever avec précision le conteneur dont le poids dépasse 100 tonnes et dont la longueur extérieure est de l'ordre de 5 mètres, ce qui pose des problèmes techniques ardus et diminue la sécurité d'exploitation et, en cas de séisme, l'étanchéité entre la bride à joints d'étanchéité et le conteneur n'est pas complètement assurée.

La demande de brevet français FR 2 496 323 ci-dessus propose un dispositif d'accostage permettant de palier aux inconvénients du dispositif d'accostage ci-dessus décrit dans cette même demande.

Selon ce dispositif, on prévoit des moyens permettant d'éviter le soulèvement du conteneur afin d'obtenir un écart minimal entre le plafond du hall et la bride supérieure du conteneur et comprenant des cales situées sous le conteneur. Ce dispositif comprend en outre un soufflet métallique permettant d'assurer la continuité de l'étanchéité entre la fosse et le conteneur et qui est entraîné par un système moteur de façon à appliquer l'extrémité inférieure du soufflet métallique pourvue d'une bride porte-joints contre la bride supérieure du conteneur, ce système moteur étant placé soit sur le chariot, soit sur le conteur et comprenant un dispositif de visseuses et de boîtes à ressorts.

Un tel système moteur à dispositif de visseuses et boîtes à ressorts permettant d'accrocher le soufflet métallique et de le tirer vers le bas pour appliquer la bride porte-joints sur la bride supérieure du conteneur et assurer la continuité de l'étanchéité réalisée par le soufflet est également décrit dans la demande de brevet français FR 2 582 139 au nom de la demanderesse.

Cependant, ce dispositif connu présente les inconvénients suivants :
- la nécessité d'un ajustement très précis du conteneur sur le chariot, ce qui implique des opérations d'ajustement assez longues du conteneur sur le chariot,
- le dispositif à visseuses et boîtes à ressorts est constitué de très nombreuses pièces le rendant extrêmement complexe à installer et extrêmement couteux,
- le dépannage en cas de grippage d'une visseuse est délicat du fait de la nécessité de la découper dans un espace très restreint,
- une augmentation du diamètre de la pénétration exige d'installer davantage de ressorts de rappel, ce qui induit des efforts conséquents dans les visseuses et les écrous d'accostage, et
- des contraintes accrues en termes de séisme.

La présente invention a pour but de palier les inconvénients ci-dessus.

A cet effet, selon l'invention, le dispositif d'accostage d'un conteneur de combustible irradié sous une fosse d'une installation nucléaire et contenant du combustible irradié, comprenant un chariot sur lequel est positionné le conteneur qui est amené sous une pénétration assurant la liaison entre la fosse et le hall où est situé le chariot pour le chargement en combustible irradié du conteneur, un soufflet métallique logé dans la pénétration, permettant d'assurer la continuité de l'étanchéité entre la fosse et le conteneur, et au moins deux vérins positionnés dans la pénétration et aptes à abaisser l'extrémité inférieure du soufflet métallique afin d'appliquer une bride porte-joints solidaire de cette extrémité en appui d'étanchéité sur une surface plane supérieure du conteneur, est caractérisé en ce qu'il comprend une bride d'accostage solidaire de l'extrémité inférieure du soufflet métallique et les vérins sont interposés entre la structure de la pénétration et la bride d'accostage pour transmettre le mouvement de translation des vérins à l'extrémité inférieure du soufflet métallique et à la bride porte-joints et la bride d'accostage comprend au moins deux verrous commandés aptes à verrouiller la bride d'accostage au conteneur en position basse de l'extrémité inférieure du soufflet métallique pour maintenir la bride porte-joints en appui d'étanchéité sur la surface supérieure du conteneur.

De préférence, les vérins sont reliés à la structure de la pénétration et à la bride d'accostage par des articulations permettant, lors de l'abaissement de l'extrémité du soufflet métallique vers le conteneur, un libre déplacement dans son plan horizontal de la bride d'accostage pour centrer la bride porte-joints relativement au conteneur en cas de décalage axial entre le conteneur et la pénétration.

Avantageusement, le conteneur comprend, solidaire de sa partie supérieure, une plaque rigide de verrouillage coopérant avec les verrous pour verrouiller la bride d'accostage au conteneur.

Selon un mode de réalisation, chaque verrou comprend un pêne en forme de doigt recourbé monté à pivotement commandé dans un boîtier de support solidaire de la bride d'accostage entre une position inactive pendant l'abaissement de l'extrémité inférieure du soufflet métallique et une position de verrouillage de la bride d'accostage au conteneur à laquelle le pêne est bloqué en appui sous le bord externe de la plaque de verrouillage.

Avantageusement, un circuit hydraulique de commande est monté sur la bride d'accostage et raccordé au boîtier de support de chaque verrou pour commander le pivotement du pêne du verrou et le bloquer à sa position en appui sous la plaque de verrouillage.

Ce dispositif comprend un autre circuit hydraulique pour assurer la commande des vérins de déplacement de la bride d'accostage et apte à mettre à la bâche les chambres des vérins lorsque les verrous occupent leur position de verrouillage de la bride d'accostage au conteneur.

Ce circuit hydraulique de commande est également apte à piloter les vérins pour les maintenir à la position haute de repos de la bride d'accostage.

La bride porte-joints comporte au moins deux plots assurant le centrage de cette bride dans la partie supérieure du conteneur.

Une virole de protection contre les rayonnements radioactifs est logée dans la structure de la pénétration autour du soufflet métallique et les vérins de commande de déplacement du soufflet métallique sont situés à l'extérieur de la virole de protection.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 représente schématiquement en coupe verticale le dispositif d'accostage de l'invention par lequel les moyens de pénétration sont accostés à un conteneur porté par un chariot ;
- la figure 2 est une vue partielle en coupe verticale représentant de façon détaillée en particulier les moyens de pénétration de la figure 1 occupant une position haute libérée du conteneur ;
- la figure 3 est une vue semblable à celle de la figure 2 montrant en détail les moyens de pénétration accostés au conteneur comme en figure 1 ;
- la figure 4 est une vue agrandie de la partie cerclée en IV de la figure 3 ;
- la figure 5 est une vue en perspective avec section verticale du dispositif des figures 2 et 3 ;
- la figure 6 est une vue de dessous suivant la flèche VI de la figure 2 ;
- la figure 7 représente un exemple de circuit hydraulique de commande de verrous du dispositif d'accostage de l'invention ; et
- la figure 8 représente un exemple de circuit hydraulique de commande des vérins de déplacement d'une bride d'accostage du dispositif d'accostage de l'invention.

En se reportant aux figures, la référence 1 désigne un chariot de manutention portant un conteneur 2 destiné à être chargé en combustible irradié et qui peut être déplacé successivement sous un système assurant l'enlèvement d'un bouchon de fermeture étanche du conteneur 2 et sous une pénétration 3 située au-dessus du hall H de chargement du conteneur 2.

On se réfèrera à la demande de brevet français FR 2 582 139 pour mieux comprendre une opération de chargement du conteneur 2 et qui comprend les étapes suivantes :
- amenée du chariot porte-conteneur 1 à un poste d'enlèvement du bouchon étanche,
- amenée du chariot porte-conteneur 1 sous la pénétration 3 afin d'assurer la continuité entre une fosse 4 contenant le combustible irradié et le conteneur 2,
- chargement du conteneur 2 par le combustible irradié, puis la séparation du conteneur 2 de la fosse 4, suivie de la vidange de la pénétration 3,
- enfin, transfert du chariot 1 sous le poste de pose et dépose du bouchon pour la remise en place du bouchon de fermeture, suivie de l'évacuation du conteneur chargé.

Le conteneur 2 est positionné sur la charpente du chariot 1 par des moyens représentés partiellement en 5 pour assurer notamment l'horizontalité de la face supérieure du conteneur 2. Ces moyens de positionnement n'ont pas à être détaillés car ne faisant pas partie de l'invention.

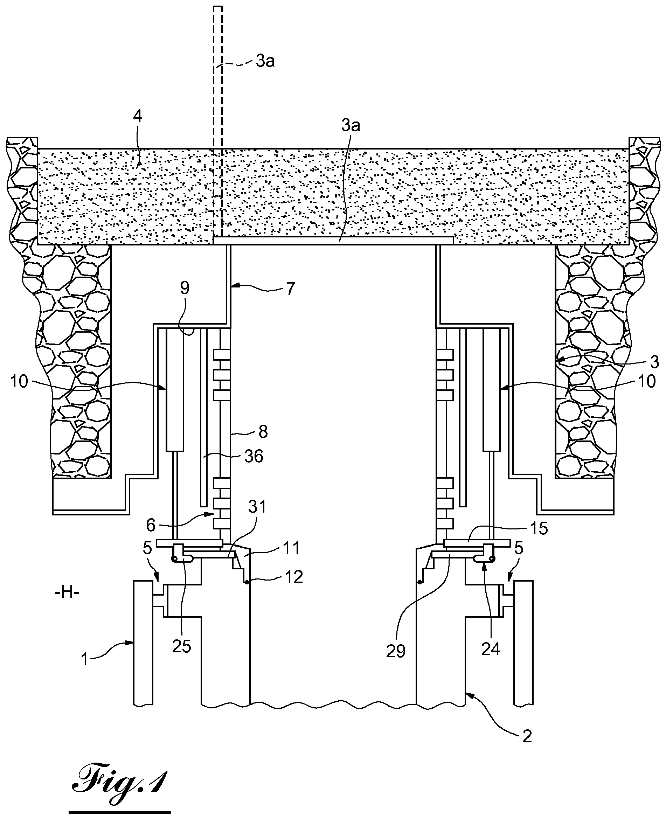

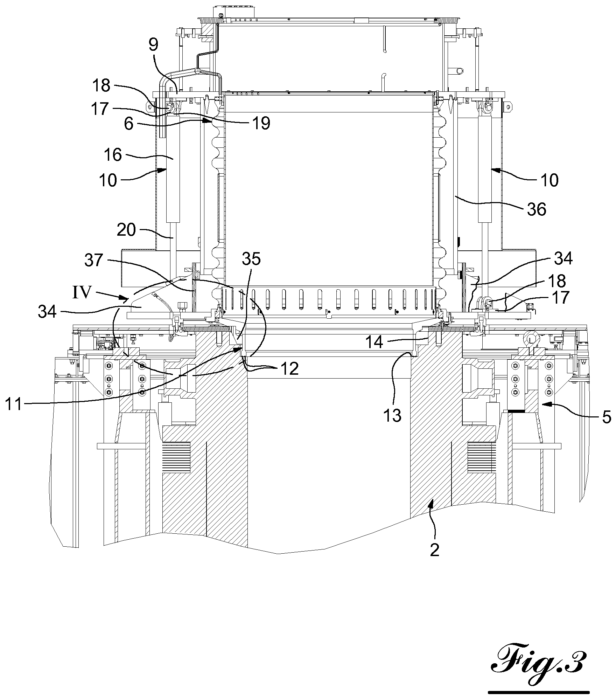

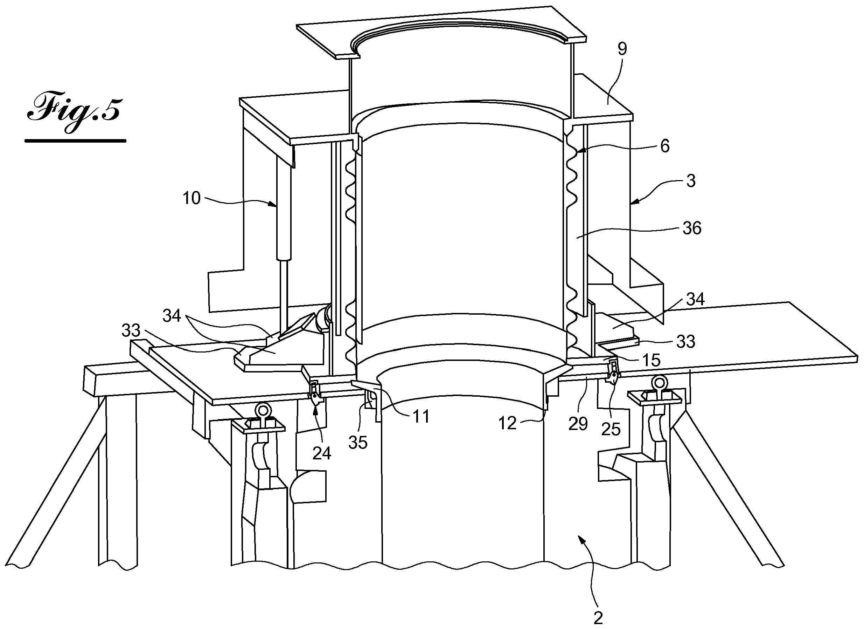

Les figures 1 à 5 représentent la situation selon laquelle le chariot 1 et le conteneur 2 sont positionnés sous la pénétration 3 en aplomb de celle-ci, laquelle pénétration fait office de sas avec la fosse 4 contenant le combustible irradié.

Pour assurer la continuité de l'étanchéité entre la fosse 4 et le conteneur 2 même dans le cas d'un séisme, on prévoit un soufflet métallique 6 logé dans la structure 7 de la pénétration 3 concentriquement autour d'un fût cylindrique vertical 8 solidaire d'une paroi horizontale 9 de la structure 7 de la pénétration 3 en s'étendant vers le bas d'une hauteur fixe déterminée.

Le soufflet métallique 6 est fixé à son extrémité supérieure à la paroi horizontale 9 de la structure 7 de la pénétration 3 et le mouvement d'élongation de ce soufflet est réalisé par un mécanisme à au moins deux vérins verticaux 10, dans le cas présent au nombre de quatre, logés dans la structure 7 de la pénétration 3 autour du soufflet métallique 6.

Les vérins 10 peuvent être commandés pour abaisser l'extrémité inférieure du soufflet métallique 6 afin d'appliquer une bride annulaire 11 munie de joints 12, solidaire de l'extrémité du soufflet métallique 6, en appui d'étanchéité sur une surface plane supérieure et annulaire 13 du conteneur 2. La surface d'appui 13 du conteneur 2 peut être celle recevant le bouchon d'étanchéité, laquelle surface d'appui 13 est surmontée par une surface circulaire dressée 14 s'apparentant à un lamage recevant également le bouchon d'étanchéité.

Selon l'invention, une bride annulaire d'accostage 15 s'étendant horizontalement est solidaire de l'extrémité inférieure du soufflet métallique 6 et les vérins 10 sont interposés entre la structure 7 de la pénétration 3 et la bride d'accostage 15 pour transmettre le mouvement de translation des vérins 10 à l'extrémité inférieure de ce soufflet.

Chaque vérin 10 a son cylindre 16 fixé à la paroi horizontale 9 de la structure 7 de la pénétration 3 par l'intermédiaire d'une articulation constituée par une chape 17 solidaire de la paroi 9 et d'un axe 18 traversant la chape 17 et une extrémité supérieure 19 du cylindre 16.

La tige 20 de chaque vérin 10 a son extrémité inférieure reliée sur la bride d'accostage 15 par l'intermédiaire d'une articulation pouvant être identique à l'articulation reliant le cylindre 16 du vérin 10 à la paroi horizontale 9.

Les articulations reliant chaque vérin 10 à la paroi horizontale 9 et à la bride d'accostage 15 peuvent également être du type à rotule.

En tout cas, lorsque les vérins 10 sont commandés pour assurer le déplacement de la bride d'accostage 15 notamment pour abaisser l'extrémité inférieure du soufflet métallique 6, les articulations reliant les vérins 10 à la paroi horizontale 9 et à la bride d'accostage 15 permettent un libre déplacement dans son plan horizontal de la bride d'accostage 15 pour, au besoin, recentrer la bride porte-joints 11 relativement à la partie supérieure du conteneur 2 en cas de décalage axial entre le conteneur 2 et la pénétration.

La bride d'accostage 15 est solidarisée à l'extrémité inférieure du soufflet métallique 6 par l'intermédiaire d'une bride annulaire de fixation 21 située entre la bride d'accostage 15 et une paroi annulaire 22 d'extrémité inférieure du soufflet métallique 6.

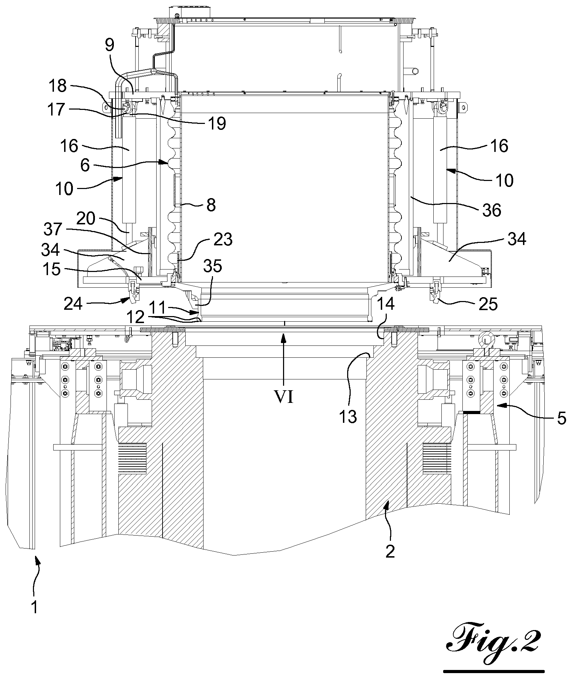

La bride porte-joints 11 est fixée à la face d'extrémité inférieure de la paroi annulaire 22. La bride porte-joints 11 est pourvue d'une paroi supérieure circulaire et ajourée 23 montée concentriquement autour de la partie d'extrémité inférieure du fût cylindrique 8 lorsque le soufflet métallique 6 occupe sa position haute de repos représentée en figure 2.

La bride d'accostage 15 comprend au moins deux verrous 24, dans le cas présent au nombre de quatre, diamétralement opposés et qui peuvent être commandés pour verrouiller la bride d'accostage 15 au conteneur 2 en position basse du soufflet métallique 6 pour maintenir la bride porte-joints 11 en appui d'étanchéité sur la surface supérieure 13 du conteneur 2.

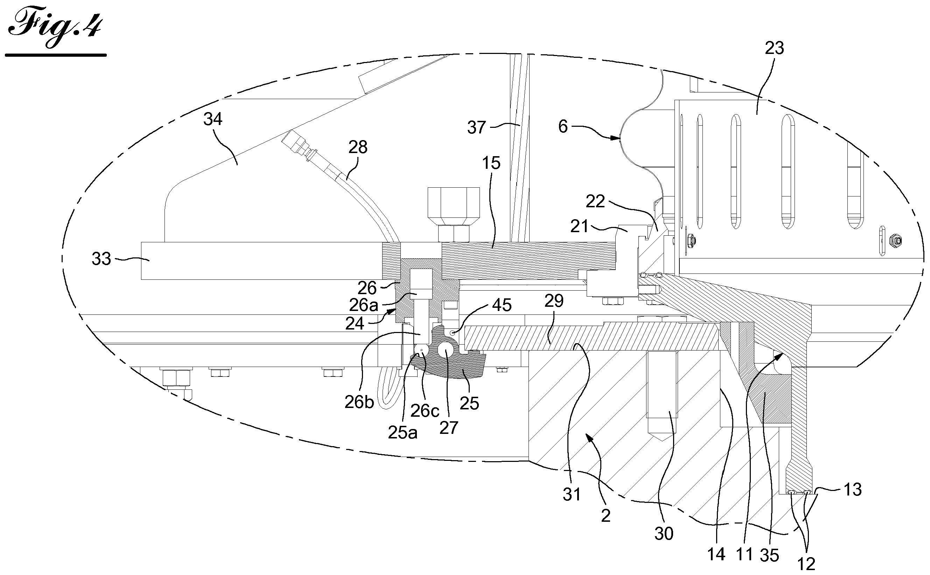

Selon le mode de réalisation représenté plus en détail à la figure 4, chaque verrou 24 comprend un pêne 25 approximativement en forme de doigt recourbé monté pivotant dans un boîtier 26 solidaire de la bride d'accostage 15 sous celle-ci. Chaque pêne 25 d'un verrou 24 est monté pivotant autour d'un axe de pivotement horizontal 27 solidaire du boîtier 26 et s'étendant perpendiculairement par rapport au plan de la figure 4.

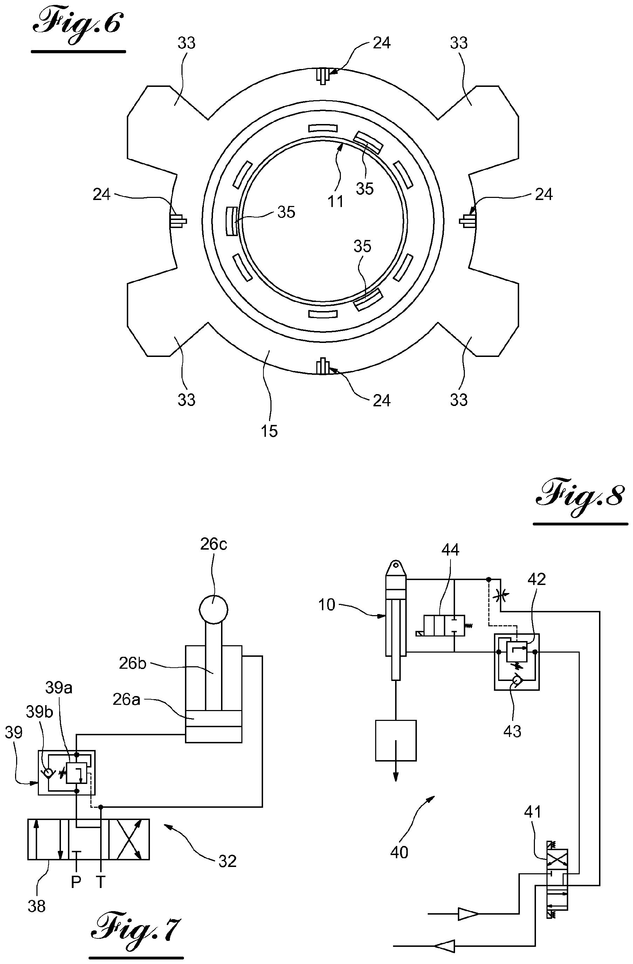

Le pivotement du pêne 25 de chaque verrou 24 est commandé par un circuit hydraulique 32, dont un exemple est représenté en figure 7, de préférence monté sur la bride d'accostage 15 en étant raccordé au boîtier 26 du verrou 24 par une conduite hydraulique 28. Le boîtier 26 contient un vérin hydraulique à piston 26a et tige 26b dont l'extrémité inférieure comporte une bille 26c en appui sur un évidement 25a d'extrémité du pêne 25 pour provoquer le pivotement du pêne autour de l'axe 27 par le circuit hydraulique 32.

Le conteneur 2 comprend une plaque annulaire rigide de verrouillage 29 qui est fixée, par l'intermédiaire de vis de fixation 30, sur une face annulaire plane, horizontale et supérieure 31 du conteneur 2, située à l'extérieur de la partie intérieure en lamage 14 du conteneur 2 et ayant une partie externe débordant radialement de ce conteneur.

Ainsi, le circuit hydraulique 32 permet de commander le pivotement du pêne 25 de chaque verrou 24 entre une position inactive pendant l'abaissement de l'extrémité inférieure du soufflet métallique 6 à partir de la position de repos représentée en figure 2 et une position de verrouillage de la bride d'accostage 15 au conteneur 2 à laquelle le pêne 25 est bloqué en appui sous la plaque de verrouillage 29 afin d'exercer un effort permettant de maintenir la bride porte-joints 11 en appui d'étanchéité sur la surface supérieure 13 du conteneur 2 avec écrasement des joints 12 comme représenté en figure 4.

Comme cela ressort de la figure 6, la bride annulaire d'accostage 15 sous laquelle font saillies les quatre verrous 24, comprend quatre oreilles 33 deux à deux diamétralement opposées et faisant radialement saillie de la bride d'accostage 15. Deux oreilles 33 situées d'un même côté, à gauche ou à droite en considérant la figure 6, sont angulairement espacées l'une de l'autre, par exemple d'un angle d'environ 55°.

Les articulations 17, 18 des tiges 20 des quatre vérins 10 sont fixées respectivement sur les faces supérieures des quatre oreilles 33. Chaque oreille comporte deux parois ou nervures parallèles radiales de rigidification 34 entre lesquelles se trouve l'articulation correspondante 17, 18 d'une tige 20 de vérin 10.

La bride porte-joints 11 comporte au moins deux plots de centrage 35, dans le cas présent au nombre de trois, régulièrement espacés et aptes à centrer la bride porte-joints 11 dans la partie supérieure en lamage 14 du conteneur 2.

Une virole 36 de protection contre les rayonnements radioactifs est logée dans la structure 7 de la pénétration 3 entre le soufflet métallique 6 et les vérins 10. La virole 36 est solidaire de la paroi horizontale 9 de la structure 7 de la pénétration 3 et descend jusqu'au voisinage de l'extrémité inférieure du fût cylindrique 8. La bride d'accostage 15 comporte également une virole 37 de protection contre les rayonnements radioactifs solidaire de la face supérieure de cette bride concentriquement à la virole 36 à l'extérieur de cette dernière de manière à recouvrir partiellement la partie d'extrémité inférieure de la virole 36 même lorsque la bride d'accostage 15 est solidarisée au conteneur 2 par les verrous 24.

Le circuit hydraulique 32 de commande du pivotement du pêne 25 entre ses positions inactive et de verrouillage de la bride d'accostage 15 en partie supérieure du conteneur 2 comprend un distributeur 4/3 portant la référence 38 et un ensemble 39 à réducteur de pression 39a et à clapet anti-retour 39b piloté à l'ouverture pour maintenir la pression hydraulique de blocage du pêne 25 sous la plaque de verrouillage 29 et maintenir la bride porte-joints 11 en appui d'étanchéité sur la surface supérieure 13 du conteneur 2 pendant le transfert de combustible irradié de la fosse 4 dans le conteneur 2.

On va décrire maintenant une opération d'accostage, c'est-à-dire la traction du soufflet métallique 6 et sa fixation à la partie supérieure du conteneur 2 pour assurer la continuité de l'étanchéité lors du chargement de ce conteneur en combustible irradié.

Le chariot 1 est déplacé avec le conteneur 2 dans le hall H et positionné sous la pénétration 3 sensiblement à l'aplomb de celle-ci comme représenté en figure 2 où la bride porte-joints 11 et la bride d'accostage 15 sont maintenues à une position haute de repos par les vérins 10. A cet effet, le circuit hydraulique 40 de commande de chaque vérin 10 représenté en figure 8 comprend un distributeur 41 du type 4/3, un ensemble à réducteur de pression 42 et clapet anti retour piloté 43 ainsi qu'un distributeur 44 du type 2/2 interposé entre les deux chambres supérieure et inférieure du vérin 10. Ainsi, le circuit hydraulique à la position des distributeurs 41, 44 représentée à la figure 8, permet de maintenir dans les chambres des vérins 10 une pression permettant de garantir le maintien en position haute de repos du soufflet métallique 6, de la bride porte-joints 11 et de la bride d'accostage 15.

Ensuite, les distributeurs 41, 44 du circuit hydraulique de commande 40 sont pilotés de manière à permettre aux vérins 10 de provoquer le mouvement d'élongation vers le bas du soufflet métallique 6 et, par conséquent, l'abaissement de la bride d'accostage 15 et de la bride porte-joints 11 vers la partie supérieure du conteneur 2. Pendant l'abaissement de ces deux brides, les pênes 25 des verrous 24 occupent leur position inactive à laquelle les pênes 25 sont approximativement verticaux.

En l'absence de décalage axial entre le conteneur 2 et la pénétration 3, la bride porte-joints 11 pénètrera de manière centrée dans la partie supérieure du conteneur 2 jusqu'à ce que le joint 12 de cette bride vienne en appui d'étanchéité sur la surface supérieure 13 du conteneur 2. En cas de décalage axial entre le conteneur 2 et la pénétration 3, les plots de centrage 35 en coopération avec la possibilité de déplacement horizontal de la bride d'accostage 15 de par les articulations 17,18 reliant les vérins 10 entre la paroi horizontale 9 de la structure 7 de la pénétration 3 et la bride de fixation 15, la bride porte-joints 11 peut être recentrée relativement au conteneur 2 lors de la pénétration de cette bride dans la partie supérieure de ce conteneur.

Une fois que les vérins 10 ont abaissé la bride porte-joints 11 a sa position en appui d'étanchéité sur la surface plane 13 du conteneur 2, le distributeur 38 du circuit hydraulique 32 est commandé pour provoquer le pivotement simultané des pênes 25 des verrous 24 à leur position de verrouillage en dessous de la plaque de verrouillage 29 de manière à exercer sur la bride porte joints 11 une pression écrasant les joints 12 en appui d'étanchéité sur la surface plane 13 du conteneur 2 et ce distributeur 38 est maintenu à sa position pour bloquer hydrauliquement les pênes 25 des verrous 24 à leur position de verrouillage sous la plaque de verrouillage 29. La commande du distributeur 38 pour provoquer le pivotement des pênes 25 peut être effectuée par détection de la pression hydraulique des vérins 10 lorsque la bride porte-joints 11 est en appui d'étanchéité sur le conteneur 2 et lorsque chaque pêne 25 occupe sa position sous la plaque de verrouillage 29, au moins un capteur 45, par exemple du type inductif et logé dans le boîtier 26, permet de détecter cette position du pêne 25 pour que le distributeur 38 maintienne la pression hydraulique de blocage du pêne 25 sous la plaque de verrouillage 29.

Ensuite, les distributeurs 41, 44 du circuit hydraulique 40 de commande des vérins 10 sont pilotés de manière à mettre à la bâche les chambres de ces vérins qui sont alors complètement libres, pour garantir une liberté de mouvement. Ainsi, contrairement aux systèmes antérieurs, la fonction de maintien de l'étanchéité selon l'invention n'est ni liée au génie civil (pénétration 3), ni au chariot 1. En cas de séisme, l'ensemble est donc isolé et maintenu étanche quels que soient les mouvements transmis par le bâtiment à la pénétration 3 et au conteneur 2.

Une fois l'opération d'accostage réalisée, le couvercle 3a de la pénétration 3 est basculé de sa position de fermeture à sa position d'ouverture comme représenté en figure 1 pour permettre au combustible irradié présent dans la fosse 4 d'être chargé dans le conteneur 2.

Une fois le conteneur 2 rempli en combustible irradié, les distributeurs 41, 44 du circuit hydraulique 40 sont pilotés pour mettre en pression les chambres des vérins 10 et le distributeur 38 du circuit hydraulique 32 est piloté pour commander le pivotement des pênes 25 des verrous 24 à leur position inactive, et déverrouillant de la sorte la bride porte-joints 11 de la partie supérieure du conteneur 2. Puis, les vérins 10, sous la commande du circuit hydraulique 40 provoque la remontée de la bride d'accostage 15, de la bride porte-joints 11 et du soufflet d'étanchéité 6 jusqu'à la position haute de repos de la figure 2 à laquelle les distributeurs 41, 44 du circuit hydraulique 40 sont pilotés pour que les vérins 10 maintiennent la bride d'accostage 15 à cette position haute.

Bien entendu, les circuits 32 et 40, au lieu d'être hydrauliques, peuvent être pneumatiques.

Le dispositif d'accostage ci-dessus décrit de l'invention présente les avantages suivants :
- il n'est pas nécessaire de soulever le conteneur sous la pénétration pour effectuer l'opération d'accostage comme dans les systèmes décrits dans les demandes de brevet français FR 2 496 323 et FR 2 592 139,
- les coûts de construction du dispositif d'accostage sont réduits du fait qu'il y a moins de composants installés dans la pénétration,
- le dispositif d'accostage fonctionne même en cas de décalage du conteneur par rapport à la pénétration,
- la maintenance de ce dispositif est simplifiée du fait de l'utilisation de composants standards, et
- en cas de séisme, l'étanchéité entre la bride porte-joints et le conteneur est améliorée car la pression exercée sur les joints d'étanchéité de la bride porte-joints est maintenue constante par les verrous de la bride d'accostage, ces verrous étant indépendant à la fois de la charpente du chariot et de la pénétration.

## Revendications

1. Dispositif d'accostage d'un conteneur (2) de combustible irradié sous une fosse (4) d'une installation nucléaire, le dispositif d'accostage comprenant un hall (H), une fosse (4) et une pénétration (3) assurant la liaison entre la fosse et le hall, le dispositif d'accostage comprenant aussi un chariot (1) situé dans le hall de telle façon qu'un conteneur peut être positionné sur le chariot et amené sous la pénétration (3) pour le chargement en combustible irradié du conteneur (2), le dispositif d'accostage comprenant en plus un soufflet métallique (6) et une bride porte-joints (11), le soufflet métallique étant logé dans la pénétration (3) et permettant d'assurer la continuité de l'étanchéité entre la fosse (4) et le conteneur (2), et au moins deux vérins (10) positionnés dans la pénétration (3) et aptes à abaisser l'extrémité inférieure du soufflet métallique (6) afin d'appliquer la bride porte-joints (11) solidaire de cette extrémité en appui d'étanchéité sur une surface plane supérieure (13) du conteneur (2), le dispositif d'accostage comprenant en outre une bride d'accostage (15) aussi solidaire de l'extrémité inférieure du soufflet métallique (6), les vérins (10) étant interposés entre la structure (7) de la pénétration (3) et la bride d'accostage (15) pour transmettre le mouvement de translation des vérins (10) à l'extrémité inférieure du soufflet métallique (6) et à la bride porte-joints (11), la bride d'accostage (15) comprenant au moins deux verrous (24) adaptés pour être commandés par un circuit hydraulique de commande (32) pour verrouiller la bride d'accostage (15) au conteneur (2) en position basse de l'extrémité inférieure du soufflet métallique (6) pour maintenir la bride porte-joints (11) en appui d'étanchéité sur la surface supérieure (13) du conteneur (2).

2. Dispositif selon la revendication 1, dans lequel les vérins (10) sont reliés à la structure (7) de la pénétration (3) et à la bride d'accostage (15) par des articulations (17, 18) permettant, lors de l'abaissement de l'extrémité du soufflet métallique (6) vers le conteneur (2), un libre déplacement dans son plan horizontal de la bride d'accostage (15) pour centrer la bride porte-joints (11) relativement au conteneur (2) en cas de décalage axial entre le conteneur (2) et la pénétration (3).

3. Dispositif selon la revendication 1 ou 2, dans lequel le conteneur (2) comprend, solidaire de sa partie supérieure, une plaque rigide de verrouillage (29) coopérant avec les verrous (24) pour verrouiller la bride d'accostage (15) au conteneur (2).

4. Dispositif selon la revendication 3, dans lequel chaque verrou (24) comprend un pêne (25) en forme de doigt recourbé monté à pivotement commandé, par le circuit hydraulique de commande (32), dans un boîtier de support (26) solidaire de la bride d'accostage (15) entre une position inactive pendant l'abaissement de l'extrémité inférieure du soufflet métallique (6) et une position de verrouillage de la bride d'accostage (15) au conteneur (2) à laquelle le pêne (25) est bloqué en appui sous le bord externe de la plaque de verrouillage (29).

5. Dispositif selon la revendication 4, dans lequel le circuit hydraulique de commande (32) est monté sur la bride d'accostage (15) et raccordé au boîtier de support (26) de chaque verrou (24) pour commander le pivotement du pêne (25) du verrou (24) et le bloquer à sa position en appui sous la plaque de verrouillage (29).

6. Dispositif selon l'une des revendications 1 à 5, comprenant un circuit hydraulique (40) de commande des vérins (10) de déplacement de la bride d'accostage (15) et apte à mettre à la bâche les chambres des vérins (10) lorsque les verrous (24) occupent leur position de verrouillage de la bride d'accostage (15) au conteneur (2).

7. Dispositif selon la revendication 6, dans lequel le circuit hydraulique de commande (40) est apte à piloter les vérins (10) pour les maintenir à la position haute de repos de la bride d'accostage (15).

8. Dispositif selon l'une des revendications 1 à 7, dans lequel la bride porte-joints (11) comporte au moins deux plots (35) assurant le centrage de cette bride dans la partie supérieure du conteneur (2).

9. Dispositif selon l'une des revendications 1 à 8, dans lequel une virole (36) de protection contre les rayonnements radioactifs est logée dans la structure (7) de la pénétration (3) autour du soufflet métallique (6) et les vérins (10) de commande de déplacement du soufflet métallique (6) sont situés à l'extérieur de la virole de protection (36).

## Patentansprüche

1. Vorrichtung zum Anlegen eines Behältnisses (2) für abgebrannten Brennstoff unter einem Graben (4) einer kerntechnischen Anlage, wobei die Vorrichtung eine Halle (H), einen Graben (4) und eine Durchdringung (3), die die Verbindung zwischen Graben und Halle gewährleistet, besitzt, wobei die Vorrichtung ferner einen Wagen (1) umfasst, der derart in der Halle angeordnet ist, dass ein Behälter auf dem Wagen positioniert und unter die Durchdringung (3) gebracht werden kann, um den Behälter (2) mit abgebranntem Brennstoff zu beladen, wobei die Vorrichtung ferner umfasst einen Metallbalg (6) und eine Dichtungshalterung (11), wobei der Metallbalg in der Durchdringung (3) angeordnet ist und die Kontinuität der Abdichtung zwischen Graben (4) und Behälter (2) gewährleistet, und mindestens zwei Heber (10), die in der Durchdringung (3) positioniert sind und dazu geeignet sind, das untere Ende des Metallbalges (6) abzusenken, um die mit diesem Ende fest verbundene Dichtungshalterung (11) mit einer ebenen Oberseite (13) des Behälters (2) dicht in Anlage zu bringen, wobei die Vorrichtung ferner einen Anlegeflansch (15) umfasst, der ebenfalls mit dem unteren Ende des Metallbalges (6) fest verbundene ist, wobei die Heber (10) zwischen der Struktur (7) der Durchdringung (3) und dem Anlegeflansch (15) positioniert sind, um die Translation der Heber (10) auf das untere Ende des Metallbalges (6) und die Dichtungshalterung (11) zu übertragen, wobei der Anlegeflansch (15) mindestens zwei Sperren (24) umfasst, die dazu geeignet sind, durch einen Hydraulikkreis (32) gesteuert zu werden, um den Anlegeflansch (15) am Behälter (2) in der tiefen Position des unteren Endes des Metallbalges (6) zu verriegeln, um die Dichtungshalterung (11) in dichter Anlage mit der Oberseite (13) des Behälters (2) zu halten.

2. Vorrichtung nach Anspruch 1, in der die Heber (10) über Gelenke (17, 18) mit der Struktur (7) der Durchdringung (3) und mit dem Anlegeflansch (15) verbunden sind, was beim Absenken des Endes des Metallbalges (6) hin zum Behälter (2) eine freie Bewegung des Anlegeflansches (15) auf dessen horizontaler Ebene ermöglicht, um die Dichtungshalterung (11) im Falle einer axialen Verschiebung zwischen dem Behälter (2) und der Durchdringung (3) relativ zum Behälter (2) zu zentrieren.

3. Vorrichtung nach Anspruch 1 oder 2, in der der Behälter (2) eine mit seinem Oberteil fest verbundene, steife Verriegelungsplatte (29) umfasst, die mit den Sperren (24) zusammenwirkt, um den Anlegeflansch (15) mit dem Behälter (2) zu verriegeln.

4. Vorrichtung nach Anspruch 3, in der jede Sperre (24) einen gekrümmten fingerförmigen Riegel (25) umfasst, der schwenkbar montiert ist in einem mit dem Anlegeflansch (15) fest verbundenen Stützgehäuse (26) zwischen einer inaktiven Stellung beim Absenken des unteren Endes des Metallbalges (6) und einer Verriegelungsstellung des Anlegeflansches (15) mit dem Behälter (2), mit dem der Riegel (25) an der Außenkante der Verriegelungsplatte (29) in Anlage gehalten wird, und dabei gesteuert wird durch den Hydraulikkreis (32).

5. Vorrichtung nach Anspruch 4, in der der Hydraulikkreis (32) auf dem Anlegeflansch (15) montiert ist und mit dem Stützgehäuse (26) jeder Sperre (24) verbunden ist, um die Schwenkung des Riegels (25) der Sperre (24) zu steuern und ihn unter der Verrieglungsplatte (29) in Anlage zu halten.

6. Vorrichtung nach einem der Ansprüche 1 bis 5, umfassend einen Hydraulikkreis (40) zur Steuerung der Heber (10) der Bewegung des Anlegeflansches (15), und der zur Druckentlastung der Kammern der Heber (10) geeignet ist, wenn die Sperren (24) sich in der Stellung befinden, in der sie den Anlegeflansch (15) mit dem Behälter (2) verriegeln.

7. Vorrichtung nach Anspruch 6, wobei der Hydraulikkreis (40) dazu geeginet ist, die Heber (10) zu steuern, um sie in der oberen Ruhestellung des Anlegeflansches (15) zu halten.

8. Vorrichtung nach einem der Ansprüche 1 bis 7, wobei die Dichtungshalterung (11) mindestens zwei Kontaktstellen (35) aufweist, die die Zentrierung der Halterung im Oberteil des Behälters (2) gewährleisten.

9. Vorrichtung nach einem der Ansprüche 1 bis 8, in der ein Ring (36) zum Schutz vor radioaktiver Strahlung in der Struktur (7) der Durchdringung (3) um den Metallbalg (6) liegt und die Heber (10) zur Steuerung der Verschiebung des Metallbalges (6) außerhalb des Klemmrings (36) angeordnet sind.

## Claims

1. Device for docking an irradiated fuel container (2) under a pit (4) of a nuclear installation, wherein the docking device comprises a hall (H), a pit (4) and an ingress (3) providing the connection between the pit and the hall, wherein the docking device also comprises a carriage (1) located in the hall so that a container may be positioned on the carriage and brought under the ingress (3) for the loading of the container (2) with irradiated fuel, wherein the docking device further comprises a metal bellows (6) and a sealing flange (11), wherein the metal bellows is housed in the ingress (3) and makes it possible to ensure the continuity of the seal between the pit (4) and the container (2), and at least two jacks (10) positioned in the ingress (3) and able to lower the lower end of the metal bellows (6) in order to apply the sealing flange (11) secured to the said end against a flat upper surface (13) of the container (2) in order to seal them, wherein the docking device further comprises a docking flange (15) that is also secured to the lower end of the metal bellows (6), wherein the jacks (10) are interposed between the structure (7) of the ingress (3) and the docking flange (15) in order to transmit the translational movement of the jacks (10) to the lower end of the metal bellows (6) and to the sealing flange (11), wherein the docking flange (15) comprises at least two locks (24) designed to be controlled by a hydraulic control circuit (32) for locking the docking flange (15) to the container (2) in the lower position of the lower end of the metal bellows (6) in order to hold the sealing flange (11) in sealing engagement with the upper surface (13) of the container (2).

2. Device according to claim 1, wherein the jacks (10) are connected to the structure (7) of the ingress (3) and to the docking flange (15) by articulations (17, 18) allowing, during lowering of the end of the metal bellows (6) to the container (2), free movement of the docking flange (15) in its horizontal plane in order to center the sealing flange (11) relative to the container (2) in the event of axial displacement between the container (2) and the ingress (3).

3. Device according to claim 1 or 2, wherein the container (2) comprises, secured to its upper part, a rigid locking plate (29) interacting with the locks (24) to lock the docking flange (15) to the container (2).

4. Device according to claim 3, wherein each lock (24) comprises a latch (25) shaped like a curved finger and so mounted to be pivotally controlled, by the hydraulic control circuit (32), in a support housing (26) secured to the docking flange (15) between an inactive position during the lowering of the lower end of the metal bellows (6) and a position of locking the docking flange (15) to the container (2) to which the latch (25) is locked under the outer edge of the locking plate (29).

5. Device according to claim 4, wherein the hydraulic control circuit (32) is mounted on the docking flange (15) and connected to the support housing (26) of each lock (24) in order to control the pivoting of the latch (25) of the lock (24) and to lock it in its support position under the locking plate (29).

6. Device according to one of the claims 1 to 5, comprising a hydraulic circuit (40) for controlling the jacks (10) for moving the docking flange (15) and designed to cover the chambers of the jacks (10) when the locks (24) occupy their position of locking the docking flange (15) to the container (2) .

7. Device according to claim 6, wherein the hydraulic control circuit (40) is designed to control the jacks (10) in order to maintain the high rest position of the docking flange (15) .

8. Device according to one of claims 1 to 7, wherein the sealing flange (11) comprises at least two studs (35) ensuring the centering of this flange in the upper part of the container (2) .

9. Device according to one of the claims 1 to 8, wherein a ferrule (36) for protection against radioactive radiation is housed in the structure (7) of the ingress (3) around the metal bellows (6), while the jacks (10) controlling the movement of the metal bellows (6) are located outside the protective ferrule (36) .
